# EUROPEAN PATENT SPECIFICATION

(11) **EP 4 194 596 B1**
(45) Date of publication and mention of the grant of the patent: **13.08.2025**
(21) Application number: 22170405.9
(22) Date of filing: 28.04.2022
(51) Int. Cl.: D04H 1/4374, B01D 46/10, B29C 64/118, B32B 5/02, B32B 5/22, D01D 5/00, D04H 1/728, G01N 1/22

(54) **NANO/MICRO COMPOSITE FIBROUS FILTER FOR SAMPLING AEROSOL PARTICLES AND PRODUCTION METHOD THEREOF**
FASERIGER NANO/MIKRO-VERBUNDFILTER ZUM ENTNEHMEN VON AEROSOLTEILCHEN UND PRODUKTIONSVERFAHREN DAVON
FILTRE FIBREUX NANO/MICRO COMPOSITE D'ÉCHANTILLONNAGE DE PARTICULES D'AÉROSOL ET SON PROCÉDÉ DE PRODUCTION

(30) Priority: 10.12.2021 LT 2021574
(43) Date of publication of application: 14.06.2023
(73) Proprietor: Kaunas University of Technology, 44249 Kaunas (LT)
(72) Inventor: Ravikumar, Preethi, Kaunas (LT); Tichonovas, Martynas, Kaunas (LT); Kauneliene, Violeta, Kaunas (LT); Dabasinskaite, Lauryna, Kaunas (LT); Krugly, Edvinas, Kaunas (LT); Martuzevicius, Dainius, Kaunas (LT); Prasauskas, Tadas, Kaunas (LT)
(74) Representative: Klimaitiene, Otilija

(56) References cited:
- CN-A- 111 298 521
- KR-A- 20150 058 918
- KOH EUNJOO ET AL: "Preparation and modification of an embossed nanofibrous materials for robust filtration performance of PM0.2 removal", JOURNAL OF INDUSTRIAL AND ENGINEERING CHEMISTRY, THE KOREAN SOCIETY OF INDUSTRIAL AND ENGINEERING CHEMISTRY, KOREA, vol. 93, 14 October 2020 (2020-10-14), pages 339 - 350, XP086363883, ISSN: 1226-086X, [retrieved on 20201014], DOI: 10.1016/J.JIEC.2020.10.010
- BUIVYDIENE DALIA ET AL: "Composite micro/nano fibrous air filter by simultaneous melt and solution electrospinning", JOURNAL OF AEROSOL SCIENCE, vol. 154, 1 May 2021 (2021-05-01), AMSTERDAM, NL, pages 105754, XP055801797, ISSN: 0021-8502, DOI: 10.1016/j.jaerosci.2021.105754

## Description

### FIELD OF INVENTION

The present invention discloses a production method of a sampling filter for collecting aerosol particles. Specifically, the sampling filter comprises a layered composite arrangement of nano- to sub-micro-meter-sized polymeric fibres, which provides an increased particle retention efficiency, better mechanical stability and variety of opportunities for post-processing by a plurality of physico-chemical or toxicological analysis techniques.

### BACKGROUND ART

Aerosol sampling based on the collection of aerosol particles on a filtering substrate is among the most commonly used methods. The filtering substrates are grouped to types of fibrous matrixes, membranes, and foams.

Membrane filters are mainly distinguished to two groups:
a) porous membranes having a complex structure with tortuous routes through the filter material. These membranes are known to be fabricated from cellulose-esters or polytetrafluoroethylene;
b) capillary pore filters having straight through pores across the membrane, fabricated from polycarbonate, polyethylene terephthalate etc.

Membrane filters possess high stability and capture efficiency. However, they provide a high pressure drop within the thickness of the filtering membrane layer.

Foam filters are constructed as a volume mesh of large pores, providing capture of coarse (respirable) particles. These filters are fabricated either of polymer (polypropylene), or stainless steel.

Fibrous matrixes are constructed as deep mesh of fibres with random orientations. They collect aerosol sample within a depth of the filtering layer, providing high filtration efficiency with a relatively low pressure drop. Fibrous matrixes are usually fabricated of mineral materials (glass, quartz) or natural materials (cellulose). Although fibrous filters are among the most common aerosol sampling substrates, they suffer from several drawbacks: a) due to the large surface area of filters, compounds of higher volatility (e. g. some PAHs or organometallic compounds) contained in the sampled particles evaporate from the filter during prolonged storage; b) blank values of mineral fibres can affect the subsequent chemical analysis (such as metals in aerosol particles); c) some formulations of pure mineral fibres (such as quartz) are mechanically unstable and disintegrate during handling.

The number of fibrous aerosol sampling filter options are limited based on their chemical composition and fibre morphology (porosity, fibre size, pore size). At the same time, the broad variety of chemical analysis methods as well as emerging new methods for chemical analysis techniques of collected particles requires the creation of bespoke filters having unique composition. No single filter medium is appropriate for all desired chemical analyses, and it is often necessary to sample on multiple substrates when chemical characterization is desired.

The present invention allows the fabrication of bespoke aerosol sample collection filters using several techniques of electrohydrodynamic polymer processing from the plurality of polymers (benefiting the selection for subsequent chemical analysis of collected particles) and obtaining plurality of surface morphologies (benefiting the selection for sampling particles of various sizes and shapes).

The closest inventions to the proposed are the following:
US Patent US2016076073A1 describes the fibre sampler for recovery of bioaerosols and particles: a bioparticle collection device and an aerosol collection system. The bioparticle collection device includes a collection medium including a plurality of fibres formed into a fibre mat and configured to collect bioparticles thereon and includes a viability enhancing material provider disposed in a vicinity of the plurality of fibres and configured to provide a viability enhancing material to the collected bioparticles to maintain viability of the bioparticles collected by the fibre mat. The patent covers collection of viable bioaerosol particles which are of limited size range. The patent presents a modification of fibres aiming to sustain bioaerosol particle viability, which is a limited modification specific to this type of particles.

The Chinese patent CN1257762C discloses "Preparation method of detection filter membrane used for bacteria and virus sampling in air". The invention provides a composite membrane suitable for sampling of air microorganisms, providing beneficial combination of action on microorganisms and retention efficiency. The composite membrane is made from a porous membrane coated with a solution of a macromolecular substance. The macromolecular substances in the composite membrane can maintain the activity of trapped microorganisms to a certain extent. The patent covers collection of viable bioaerosol particles which are of limited size range. The patent presents a modification of fibres aiming to sustain bioaerosol particle viability, which is a limited modification specific to this type of particles.

Another Chinese patent CN100586537C discloses "Reinforced microporous filter membrane and method and device for preparing the same". The invention relates to a filtering material, in particular to an enhanced microporous filter membrane for radioactive aerosol sampling monitoring and a method and device for preparing the product. The invention adopts the following technical solutions: an enhanced microporous filter membrane, which includes a non-woven fabric as a substrate, using a cast-scraped film method, scraping the casting solution on the front and back of the non-woven fabric. The patent focuses on sampling of radioactive aerosol particles, which is a narrow and specific subdivision of aerosol particles, thus cannot be applied to a general environmental aerosol.

The UK patent application GB2347879A discloses "Aerosol sampling filter". The invention presents a sampler for collecting aerosol particles from a flow of gas comprises a plurality of collection regions of a porous medium. The collection media is comprised of mesh screens of varying openings. The nets are Nylon Net Filters (Nylon PA 6,6; polyamide 6,6), supplied by Millipore UK. Such classification is based on the selective particle penetration through the mesh orifices, thus of different working mechanism than the presented invention in this patent.

The US patent application US2015336059A1 discloses "Method for producing a filter intended to filter nanoparticles, obtained filter and associated method for the collection and quantitative analysis (specifically X-Ray fluorescence) of nanoparticles". The invention relates to a method for impregnating a filter having pores suitable for retaining particles within them that may be present in a flow of air suitable for passing through the filter, according to which the filter made up of a polymer membrane (polymer of the membrane being chosen from saturated polyesters, such as polycarbonate) is impregnated with one or more organometallic salts by applying a treatment using supercritical CO₂, the metal M of each salt being chosen from among the group of rare earths, yttrium, scandium, chromium, or a combination. This invention is based on a modification of a commercial (non-fibrous) membrane thus not presenting a method for the fabrication of membrane.

One more Chinese patent CN 105954067A discloses "Sampling film and method for detection and analysis of iron ore sintering flue gas ultrafine particles by using sampling film". The invention relates to a method for sampling and analysing ultrafine particle pollutants of iron ore sintering flue gas, in particular to an ultrafine particle sampling membrane for iron ore sintering flue gas and a method for analysing ultrafine particles of iron ore sintering flue gas based on membrane detection, belongs to the field of steel metallurgy. The invention provides sampling film, which comprises a polytetrafluoroethylene base film, and a high temperature resistant tape or a conductive tape adhered to the surface of the base film. Such substrate is designed to collect particles by impaction, as opposed to filtration, thus does not represent similar collection mechanism as in this invention.

Buivydiene et al. "Composite micro/nano fibrous air filter by simultaneous melt and solution electrospinning", 2021, https://doi.org/10.1016/j.jaerosci.2021.105754 discloses a novel approach towards tackling the balance between filter efficiency and pressure drop by layering micro and nano fibres using melt and solution electrospinning. Polyamide fibre mats were fabricated by a prototype fibre printing apparatus, based on a combination of melt and solution electrospinning. Fibrous mats with favorable filtration performance characteristics were developed by optimizing the process parameters. The measurements were performed at a face velocity of 5.3 cm/s. High filtration quality factors (such as 0.068-0.085 Pa⁻¹ for PN₁ fraction) were reached due to low values of pressure drop (15.92-50.17 Pa). The filtration efficiencies ranged from 93.7 (PN₁) to 98.5% (PN₁₀). Higher ratios of nano-sub micrometer (<1 µm) to super micrometer (≥1 µm) fibres in the fibrous matrix were associated with the higher filtration quality factors.

The Korean patent application KR20150058918A discloses an electrospining apparatus, where only a certain nozzle from nozzles, arranged and installed on a nozzle block of a unit located on a front end portion, sprays a hot-melt material on a base material to form the hot-melt material to be in the shape of a dot; a nozzle, arranged and installed on a nozzle block of a unit located on a rear end portion, electrospins a polymer spinning solution. Therefore, the electrospinning apparatus can easily attach nanofiber web on the base material. The electrospinning apparatus comprises: a hot-melt unit that has at least one solution main tank which is filled with the hot-melt material, and the nozzle blocks which are installed in the case to spray the hot-melt material filled in the solution main tank and include a plurality of nozzles arranged and installed in the shape of a pin and independently controlled in order to spray the hot-melt material on the base material supplied from the outside; a spinning solution unit that has at least one solution main tank which is filled with the spinning solution, and the nozzle blocks which are installed in the case to spray the polymer spinning solution filled in the solution main tank and include a plurality of nozzles arranged in the shape of a pin to spray the polymer spinning solution on the base material supplied from the outside; collectors which are installed in each unit and are placed apart from the nozzles at a certain distance to collect the hot-melt material and the polymer spinning solution sprayed from the nozzles arranged on the nozzle blocks; a voltage generator which generates voltages on the collectors; and a subsidiary transferring device for transferring the base material. At least one hot-melt unit and at least one spinning solution unit are alternately arranged.

E.Koh et al. "Preparation and modification of an embossed nanofibrous materials for robust filtration performance of PM0.2 removal", 2021, https://doi.org/10.1016/j.jiec.2020.10.010 discloses development embossed nanofiber membranes (ENMs) using 3D patterns for use in air mask filtration and compares this structure with a planar nanofibrous materials (PNMs). The embossed nanofiber membrane (ENM) was prepared using a combination of 3D printing and electrospinning technologies to increase the surface area of the ENM compared to that of planar structures. The surface area of the ENM was three times higher (66 m³ g⁻¹) than that of the PNM (23 m³ g⁻¹). The embossing structure depended on hole size and height of the grid in the 3D pattern. The pore size of the nanofiber membranes (NMs) was controlled to 0.2 µm to enable robust filtration of ultrafine airborne particle and smog pollutants. The polyamide 6 ENM achieved excellent filtration efficiency via corona surface ionic modification with (---CH₂CHCONH₂⁺) or anion (---NHCH₂COO⁻). Ion-modification generated an electrostatic attraction or van der Waals force/repulsive force between pollutant particles and the NM surface. The dynamic particle barrier efficiency of ionic ENMs was evaluated by dynamic particle removal efficiency (%), penetration (%), resistance (mmH₂O), and air permeability (m³/m²/min) tests. Well-developed pore structures and large surface area of the NM were enhanced by the embossed structure compared to that of PNM.

The closest prior art is the Chinese patent application CN111298521A, relating to a polyurethane-polyacrylonitrile super air filter disc and a preparation method thereof. The composite fiber comprises a three-layer fiber composite structure, wherein the first layer is an electro-spinning polyurethane and polyacrylonitrile composite fiber strong supporting layer, the thickness of the first layer is 10-50 mu m, and the fiber diameter is 1-5 mu m; the second layer is a functional support layer of electrospun superfine polyurethane and polyacrylonitrile composite fibers, the thickness of the second layer is 5-10 mu m, and the fiber diameter is 0.5-1.0 mu m; the third layer is an electro-spinning polyurethane nanofiber filtering functional layer, the thickness of the third layer is 0.5-3.0 mu m, and the fiber diameter is 0.05-0.5 mu m. The polyurethane-polyacrylonitrile super air filter disc disclosed by the invention has excellent thermal stability and mechanical properties, and the specific thermal decomposition temperature is more than 400 °C; the softening temperature is higher than 160 °C; washing resistance and friction resistance; porosity about 95%; the average pore diameter of the functional layer is 0.25 micron, and the pressure difference is about 186Pa under the air flow rate of 85L/min; the interception rate of the mask for the particles with the particle size of more than 0.3 micron is more than 99.9 percent and is far better than that of an N95 mask (the interception rate is 95 percent). The CN111298521A purpose product is filters for masks with specific thickness, by the above defined maximum thickness of layers 50, 10, and 3 um, which in total sums up to 63um thickness. However, for aerosol sampling applications, the practical thickness of an aerosol sampling filter is above 140-150 micrometers.

The present invention discloses a novel method for the fabrication of a fibrous aerosol particle collection filters from a plurality of polymers, providing a platform for aerosol sampling for numerous post-sampling physico-chemical or toxicological analysis.

### SUMMARY OF INVENTION

The present invention relates to a method of producing a nano/micro fibrous filter substrate for sampling aerosol particles comprising at least three fibrous layers according to the subject-matter of claim 1. Additionally, the present invention also relates to a 2D composite filter disc according to the subject -matter of claim 13.

**Technical problem.** The presented invention solves a technical problem of an efficient aerosol particle sampling. Currently, the selection of fibrous aerosol sampling filters is limited to several materials (such as quartz or cellulose), preventing the usage of these materials for the application in subsequent chemical analyses that require specific composition of filter material not interfering with the specific method of chemical analysis. While fibrous filters are advantageous in terms of favourable efficiency and relatively low pressure drop, the fabrication methods are limited thus not allowing the production of bespoke sampling substrates necessary for a specific sampling methods and subsequent physico-chemical/toxicological treatment.

**Solution.** The invention presents a new method for the fabrication of a fibrous aerosol particle collection filters from the plurality of polymers providing a platform for aerosol sampling for numerous post-sampling analysis. The fibrous sampling media developed by this method will have controlled chemical composition, fibre and pore diameters, pressure drop, and filtration efficiency. The fibrous particle sampling filter will have high particle retention efficiency, a superior mechanical stability and bespoke chemical composition for post-processing by a plurality of chemical analysis techniques.

The proposed fabrication method relies on a electrohydrodynamic processing of polymer melts and solutions, resulting in a non-woven plurality of randomly oriented fibres ranging from 1E-7 to 1E-4 meters in diameter, and pores 1E-7 to 1E-6 m in diameter. The range of polymers and the fibrous morphologies presented in the invention provide an opportunity for air quality scientists and professionals to select sampling substrates for the bespoke needs of their research, considering further processing of collected aerosol particles. The fibrous filter is meant to be utilized in filter-based aerosol samplers, where it is inserted into a holder and exposed to the sampled air flow for a defined period of time. Aerosol particles are retained from the air flow on the top layer and may be transferred for a further analysis, such as gravimetric, spectroscopical, chemical, or toxicological.

**Advantageous technical effects.** The method for the fabrication of fibrous aerosol sampling filters presents the following advantageous technical effects:
1) It allows controlling for the chemical composition and purity of fibrous membrane in terms of the plurality of polymers available for such fabrication. Chemical composition is important for the further processing of collected particles by non-destructive techniques (including, but not limited to microscopy, spectroscopy) and destructive techniques (including, but not limited to chromatography, toxicological response);
2) It allows controlling the overall morphology of fibrous filter in terms of fibre diameter, pore size, pore gradient, packing density, and specific weight;
3) It provides superior mechanical properties by a gradient layering method of layers having different fibre sizes.

### DESCRIPTION OF DRAWINGS

The drawings are provided as a reference to possible embodiments and are not intended and should not limit the scope of the invention.

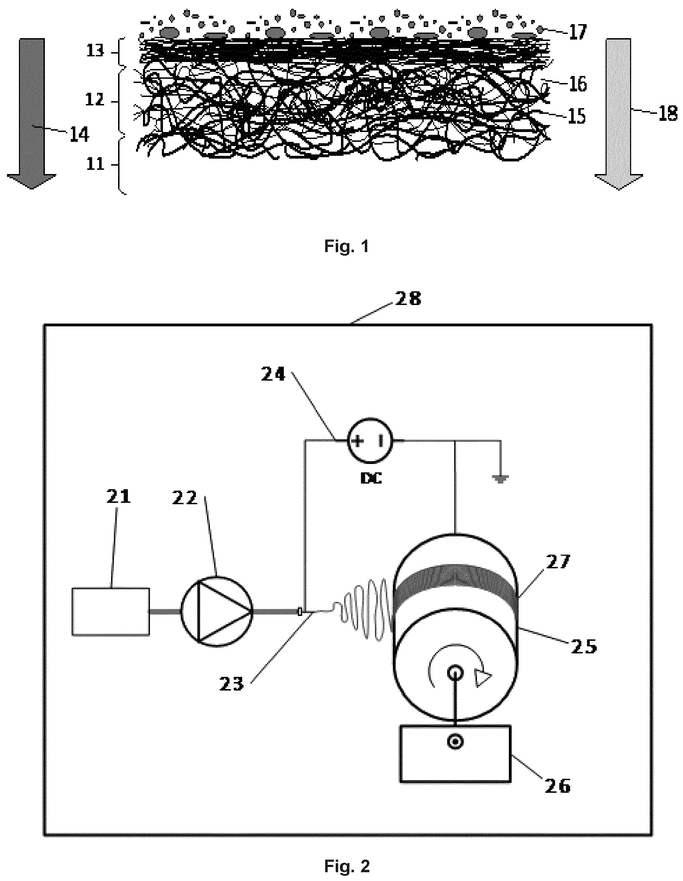

- **Fig. 1**: shows a composition of three-layer structure: **11** - Layer 1 serving as a structural microfibrous support for the layers 2 and 3; **12** - Layer 2 serving as a mesofibrous binding layer between the Layer 1 and the nanofibrous Layer 3; **13** - Layer 3 serving as the working nanofibrous surface for the collection of aerosol particles; **14** - the vector of pore size gradient; **15-**polymer fibres; **16** - pores among fibres; **17** - aerosol particles collected on the surface of the sampling filter; **18** - aerosol flow direction.
- **Fig. 2**: schematic representation of solution electrospinning technology for the fabrication of layers 2 and 3 onto the layer 1 of the sampling filter according to the present invention: **21** - polymer solution reservour; **22** - syringe pump; **23** - metal needle; **24** - high voltage supply; **25** - grounded rotating collector; **26** - rotation motor; **27** - formed fibre matrix; **28** - climate-controlled enclosure.

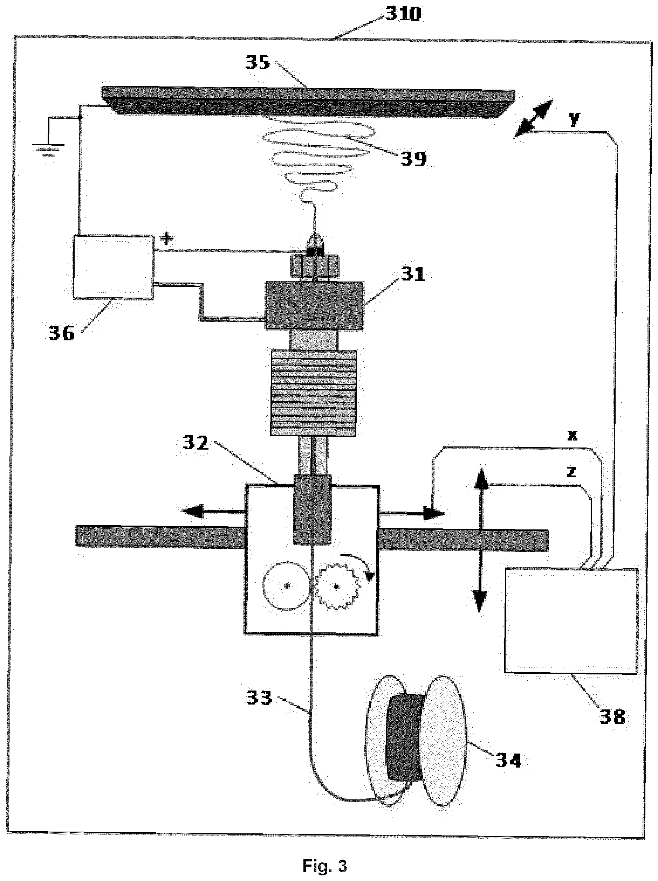

- **Fig. 3**: schematic representation of 3D fibre printing technology for the fabrication of Layer 1 (the base layer) of the sampling filter according to the present invention: **31** - heated nozzle; **32** - filament extruder; **33** - polymer filament; **34** - filament roll; **35** - grounded collector plate; **36** - high-voltage power supply; **38** - axis control; **39** - formed fibrous matrix; **310** - climate-controlled enclosure.

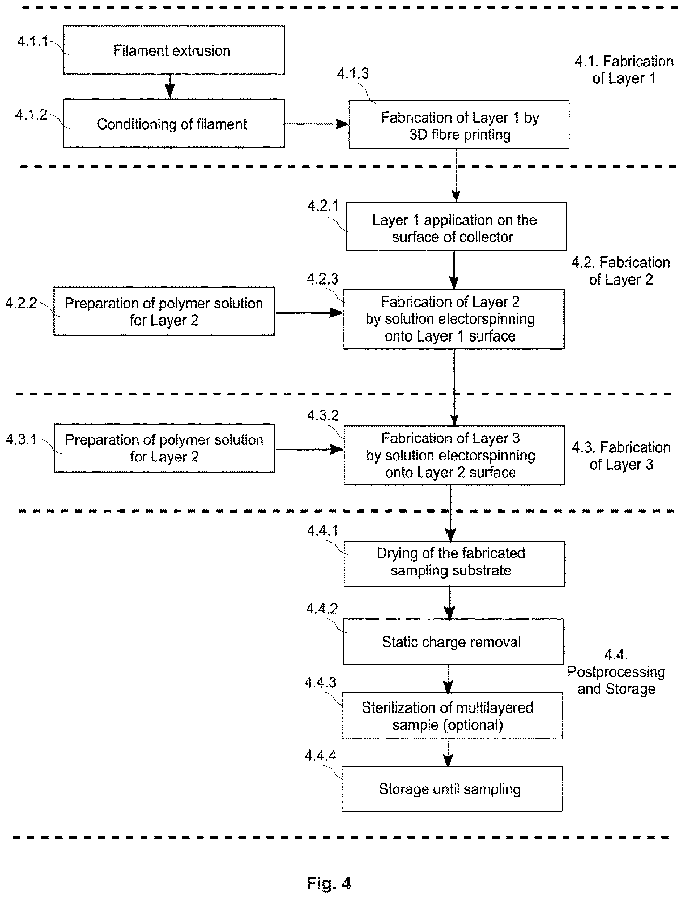

- **Fig. 4**: method stages and steps of producing the layered sampling filter substrate according to the present invention: **4.1** - fabrication of Layer 1 stage; **4.1.1** - filament extrusion; **4.1.2** - filament conditioning; **4.1.3** - fabrication of Layer 1 by 3D-fibre printing; **4.2** - fabrication of Layer 2 stage; **4.2.1-**application of Layer 1 onto the surface of a collector; **4.2.2** - preparation of polymer solution for Layer 2; **4.2.3** - fabrication of Layer 2 by solution electrospinning onto Layer 1 surface; **4.3** - fabrication of Layer 3 stage; **4.3.1** - preparation of polymer solution for Layer 3; **4.3.2** - fabrication of Layer 3 by solution electrospinning onto Layer 2 surface; 4.4 - Postprocessing and Storage stage; **4.4.1** - drying the fabricated multilayered substrate; **4.4.2** - static charge removal; **4.4.3** - sterilizing the fabricated multilayered substrate (optional); **4.3.4** - storage until sampling.

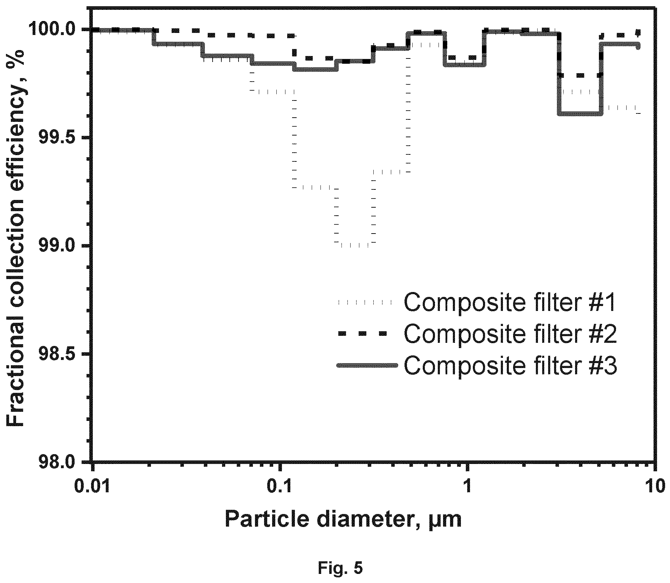

- **Fig. 5**: particle retention experimental results, obtained with the sampling filter according to the present invention.

### DETAILED DESCRIPTION OF INVENTION

**Composite filter.** The presented aerosol sampling filter is constructed as a 2D composite filter disc comprising at least three layers of non-woven fibrous matrixes. The cross-section of such composite filter is presented in Figure 1.

The three-layer composition ensures key operational parameters of the sampling filter, namely, good mechanical stability, high-efficiency of particle collection, and optimum pressure drop across the filter layer.

Layer 1 (the bottom layer) comprises a microfibre network and serves as a mechanically robust support for the upper nanofibre layers.

Layer 2 (the middle layer) comprises larger nanofibres and ensures a binding between the top and the bottom layer, as well as the adequate mechanical support for the fragile upper layer.

Layer 3 (the top layer) acts as the working layer which provides a nanofibre network for the collection of aerosol particles on the surface.

The thickness of such composite layered filter varies between 50 and 150 micrometres, depending on the materials that the layer is comprised of.

Due to a small fibre and pore size as well as high packing density of nanofibre network of the top layer, the entire composite works primarily as a surface filter where particles are collected above the fibres (as opposed to volume filters, where particles penetrate deeply into the filtering matrix). The prevailing particle capture mechanisms include impaction, interception, and diffusion.

This filter is sized accordingly to the sampling device that the filter is hosted in. The standard diameters of such sampling filter discs include, but are not limited to 25 mm, 37 mm, and 47 mm. The final size may be decided by the user, since the filter composites are first fabricated in larger rectangular sheets (for example, 200 mm x 200 mm). A round disc shape of the final product is obtained using mechanical hole puncher, computerized numerical control based cutter or similar technique.

The three-layered structure of such composite filter is unique and superior to just nanofibre membrane in terms of higher mechanical stability and lower pressure drop.

**Production method.** The production method of the composite three-layer aerosol sampling filter involves electrohydrodynamic method of polymer processing, i.e., electrospinning. This method relies on the property of the polymer solution or melt to elongate in the environment of strong electric field between two electrodes, forming thin fibres. Such fibres are emitted from a dispenser (a needle, or a hot-end nozzle) and collected on an oppositely charged electrode (drum or flat collector).

The presented invention introduces a novel production method by combining two modifications of the electrohydrodynamic polymer processing, namely, melt electrospinning and liquid-solution electrospinning.

The workflow, stages and steps of production method of the three-layer aerosol sampling filter are presented in Figure 4.

**Materials used for fabrication.** As polymer materials for fibre production are used the following ones:
- Poly(methacrylic acid methyl ester) (PMMA, Mw~350,000),
- poly(hexano-6-lactam) (PA6, Mw~100,000),
- poly(1-acrylonitrile), (PAN, Mw~150,000),
- Cellulose acetate (CA, Mw~30,000),
- poly-ε-caprolactone (PCL, Mw~80,000),
- and poly(lactic acid) (PLA, Mw~278,000).

As polymer blending solvents for Layers 2 and 3 are used the following ones:
- Formic acid (FA) (98%),
- acetone (AC) (99.8%),
- acetic acid (AA) (99.5%),
- N, N-Dimethylacetamide (DCM) (99.5%),
- N, N-dimethylformamide (DMF) (99.8%)
- and N, N-dimethylacetamide (DMA) (99.8%).

The particle sampling filter is fabricated as a three-layered structure, presented in Figure 1. Layer 1 (the base layer at the bottom of the three-layer composite) is a mechanical support for the fragile upper layers. Layer 2 (the middle layer) functions as a binding layer between micro fibrous layer 1 and nanofibrous top-layer (Layer 3), ensuring optimal adhesion and preventing breakdown of nanofibrous Layer 3 in high pressure environments. Layer 3 (the top-layer) functions as a 2D aerosol particle collection surface.

**Production of Layer 1.** The fabrication setup is based on the method for the formation of polymer fibre matrixes by the combined fused deposition model and electrospinning. This method of producing Layer 1 is disclosed in the Lithuanian patent application LT 2021 574, filed on 10 December 2021. The method of LT 2021 574 includes a process of forming polymeric fibre matrices (for Layer 1) by a combined fused deposition modelling and electrospinning process. The raw material, a polymer material in the form of the filament with a thickness of 1,7 ± 0,5 mm (or for some embodiments, may be different types of polymeric materials and their mixtures) is pushed into a variable diameter heated electrospinning head for melting the polymer using a mechanical dosing device (dispenser). The operation of the polymer mechanical dispenser and the flow rate of the polymer supply, are controlled by computer software. Using a high-voltage source to generate an electric field, when the heated electrospinning head is positively charged, the formed polymeric fibres fly in the formed electric field and then are deposited on a grounded substrate. The heating head acts as a positively charged high-voltage electrode, and the base is grounded, thereby forming an electric field between them both, which moves the polymer melt.

An electric field is generated between the heating-melting head and the matrix-forming-base. Since the heating-melting head of the polymer filament must be connected to a high-voltage source at one of the poles where the polymer melt contacts with the heating element, with the temperature sensor and also with polymer dosing medium, these elements may be easily damaged due to the high-voltage. In the invention, the high voltage is separated from the power supply of the polymer heating-melting head, thus avoiding the undesired negative effect of the high voltage on the electrical parts of the forming device. A low voltage is supplied from the low-voltage source to the heating element of the heating-melting head and to means of measuring the head temperature.

The polymer is melted and conditioned after extrusion by an electric field, thus formed into micrometrically-sized fibres flying from the positively charged polymer melting-head towards the grounded base. The small volume of the heating head ensures a short storage time of the polymer melt in the head until the filaments are formed, thus avoiding thermal degradation of the polymer during melting. The polymer melt is bundled vertically from bottom to top in an electric field, thus avoiding unwanted fibre defects and a smoother electrospinning process.

The 3D-positioning module allows for controling the structural properties of the produced matrices (Layer 1), such as the overall fibre shape, filament layout, etc., in the 2D and 3D dimensions, unlike conventional methods where the process is chaotic and uncontrolled. Fibrous matrices (Layer 1) of polymeric materials made from a polymer melt have low cytotoxicity because no harmful and toxic solvents are used during production.

A porous, non-woven fibre micrometer filament polymer matrix is obtained, with a high filament-specific-surface area, that in the present invention is used for Layer 1.

Figure 3 presents a schematic diagram of a polymeric fibre matrix (Layer 1) forming apparatus. The most preferred embodiments of the invention are described below with reference to this drawing. An apparatus is used to implement the method of forming polymeric fibre matrix (Layer 1), comprising: a heating and melting head (31) of a polymer melt with a short path in the molten travel head in the molten state and at a high temperature; a polymer filament extruder (32); supplying a polymer filament (33); a polymer filament reel (34); a base for forming polymeric fibre matrices (35) (Layer 1); a voltage source (36) comprising isolated high voltage supply and low voltage supply portions, wherein the high voltage portion is for supplying a high voltage for generating an electric field between the heating and melting head (31) of the polymer melt and the base (35); the voltage portion is for supplying voltage to the heating and melting head (31) of the polymer melt, heating and melting the polymer melt, and measuring the temperature of the head (31); a controller comprising of an ambient temperature control module and an ambient humidity control; a controller (38) for positioning of the heating and melting head (31) and the base (35) relative to each other to control the base of the polymeric fibre matrices (Layer 1) on the y-axis and the heating and melting head (31) of the polymer melt on the x-z axes; a controlled climate chamber (310) in which the polymeric fibre matrices (Layer 1) are formed.

At least one heating-melting head (31) of the polymer melt is housed inside the controlled climate chamber (310), which is a sealed chamber; a polymer filament extruder (32); supplying polymer filament (33); a polymer filament coil (34); the base of polymeric fibre matrices.

The operation of the polymeric-fibre-matrix-forming apparatus is controlled by conventional computer microprocessors. Control includes: controlling the power supply (36); controlling the basic operating environmental parameters by a controller comprising an ambient temperature control module for forming the polymeric fibre matrices and an ambient humidity control module; controlling the process of forming polymeric fibre matrices (Layer 1) on the x-, y-, z- axes using the x, y, z-axis controller (38) used in conventional fused deposition modelling 3D-printers.

According to one example of the formation of the polymeric fibre matrix, the polymer filament (33) is dosed from the reel (34) into the heating-melting head (31) of the polymer melt by the filament extruder (32). The temperature of the polymer melt heating head (31) is controlled by a temperature controller which is part of the power supply (36). The heating element of the heating-melting head (31) is connected to the low-voltage circuit of the power supply (36). The melting head (31) is connected to the high voltage supply circuit of the power supply (36). The matrix forming base (35) on which the polymeric fibre matrix is formed is grounded. In a closed climate-controlled chamber (310), the ambient temperature is controlled by the temperature control module of the controller, and the humidity is controlled by the humidity control module of the controller. The positioning of the formed matrix in space is controlled by the x, y, z axis controller (38), controlling the position between the heating-melting head (31) and the base (35) in the space defined by the x, y, z axes, where x, y, z axes are the axes of the three-dimensional Cartesian coordinate system. The heating-melting head (31) is positioned in the space on the x- and z-axis by the controller (38), while the base (35) is positioned on the y-axis. The polymer melted in the heating-melting head (31) enters directly from the head into a high-voltage electric field formed between the heating-melting head (31) and the die-forming base (35). The formation of a polymer filament matrix with controlled characteristics is started by collecting the polymer melt fibres travelling to the surface of the substrate (35) in an electric field from the bottom upwards. The high voltage generated between the heating-melting head (31) and the base (35) creates an electric field where the voltage is in the range of 0.5 kV to 30 kV. The distance between the heating-melting head (31) and the base (35) can be varied between 2 mm and 200 mm.

A controller comprising temperature and humidity control modules with integrated corresponding sensors controls the temperature and humidity of the climate chamber (310). The controller modules perform the following functions: heating, cooling, humidifying, dehumidifying. Using a user interface of the controller comprising a data output device such as an LCD display and a data input device such as a keyboard, the controller sets the desired temperature and humidity to be maintained in the climate chamber (310). The controller monitors the current ambient conditions at a frequency of 1 Hz and, accordingly, selects the combinations of temperature and humidity values suitable for forming the polymer fibre matrix in the controlled climate chamber (310). The controller also controls the polymer filament extruder (32), said control comprising controlling the polymer feed rate in the range of 0.01 to 100 mm / min. The control of the supply of polymer to the heating-melting head (31) of the polymer melt is performed manually or according to a data file used by the polymeric fibre matrix forming apparatus, which may be the same as the data file used in conventional fused deposition modelling 3D printers.

The voltage supplied by the high voltage portion of the power supply (36) is determined via a user interface of the controller that is part of the power supply (36), including a data output means such as an LCD display and a data input means such as a keyboard. The high-voltage selection range is 0 - 30 kV. The power supply (36) automatically maintains the set voltage level at a constant frequency of 100 Hz by measuring the current voltage and selecting the power of the high voltage converter. Safety functions can be selected, for example, the voltage is switched-off by opening the door of the climate chamber (310) in the event of current surges, etc.

Depending on the operating parameters used, a microfibre matrix with a filament diameter of 300.0 ± 50 nm to 4.0 ± 2.5 µm and a surface pore size of 600.0 ± 70.0 nm to 15.0 ± 6.0 µm is formed as described.

In one embodiment, the polymer heating-melting head (31) is connected to a power supply (6), a 5 - 30 kV insulated high voltage portion. This is the voltage between the heating-melting head (31) and the matrix forming base (35). Depending on the polymer and its properties, the temperature of the heating-melting head (1) can be varied from 110 to 250°C. The optimum processing temperature for a melt of a polymer, such as polycaprolactone (PCL), is 240°C. The diameter of the polymer filament to the melting head (1) is 1.7 mm ± 0.5 mm.

In all embodiments, the heating-melting head (31) is given a positive charge and acts as a positive charge electrode. The polymeric fibre matrix is deposited on a negative charge electrode which is formed as a matrix deposition substrate (35).

The positioning of the heating-melting head (31) involves its control in the x-z axes at a speed of 1 to 100 mm / s. The diameter of the heating / melting head nozzle (31) can be changed from 200 to 800 µm. In order to form fibrous matrices of smaller diameter filaments, a heating-melting head with a smaller diameter is selected.

The distance from the heating-melting head (31) of the polymer filament to the base (5) for forming the polymeric fibre matrices can be varied from 5 to 40 mm, for example, in steps of 5 mm, 10 mm, 20 mm, and 40 mm. The polymer feed rate can be varied from 4.8 to 13.4 mg / min, for example in increments of 4.8 mg / min, 8.5 mg / min, and 13.4 mg / min. Depending on the distance between the heating-melting head (31) and the matrix forming base (35), the high-voltage values can be changed from 5 kV to 28 kV, for example, in steps of 5 kV, 10 kV, 15 kV, 20 kV, and 28 kV. For example, at a distance of 10 mm between the head (31) and the base (35), the maximum safe voltage is 10 kV.

The distance between the heating-melting head (31) and the base (35) substantially affects the structure of the fibrous matrix. For example, at a distance of up to 20 mm between the head (31) and the base (35), the fibres of the matrix fuse together because the molten PCL filament fails to cool before it hits already deposited fibres. For example, at a distance of 40 mm between the head (31) and the base (35), the PCL filaments already do not stick with each other.

Increasing the value of the high voltage between the heating-melting head (31) and the matrix forming base (35) decreases the diameter of the microfibre filaments of the matrix and the width of the surface pores of the matrix. At a temperature of 250°C heating and melting head (31), a distance of 20 mm between the heating and melting head (31) and the base (35), at a PCL feed rate of 8.55 mg / min and changing the high voltage value, the diameter of the PCL matrix filaments as follows: for a voltage value of 5 kV, the filament diameter is 71 ± 14 µm; at a voltage of 10 kV, the filament diameter is 34 ± 5 µm; when the voltage value is 15 kV, the diameter of the wire is 28 ± 5 µm; when the voltage value is 20 kV, the wire diameter is 21 ± 3 µm.

Specifically for the present invention, the method stage and steps for producing Layer 1 are: **4.1** - fabrication of Layer 1 stage; **4.1.1** - filament extrusion; **4.1.2-**filament conditioning; **4.1.3** - fabrication of Layer 1 by 3D-fibre printing. Layer 1 is fabricated using a polymer filament made of either PCL, PLA, or PA6 under the following process conditions: voltage between electrodes of 5.0E+03 - 1.0E+04 V, filament feed rate 2.3E-05 - 1.2E-04 g/s, hot end temperature 230-245 °C, and tip to collector distance 5.0E-03 m - 1.0E-02 m.

**Production of Layer 2.** A liquid-solution electrospinning setup, depicted in Figure 2, is used to fabricate fibre samples. The fabrication setup consists of the following main parts: plastic syringe (21) filled with dissolved polymer (10 ml), automatic pump (22) for extruding polymer from the syringe (21), metal needle (23) with blunt end (gauge 21G), vertical rotating metal collector (25), high voltage source (24), applied to metal needle (23) and rotating metal collector (25). The dissolved polymer is collected with a 10 ml syringe (21), which is then inserted into an automatic pump (22). A plastic tube (such as silicone) is connected to the syringe (21), the other end of which is attached to the needle (23). The needle (23) is connected to a high voltage source (24). The high voltage source (24) is also connected to a rotating collector (25), which is covered with layer one fiber matrix (27). Using an automatic pump (23), the silicone tube is filled with the polymer solution. Flow rates were adjusted accordingly for each layer and the high voltage source (24) is turned on as well as the collector (25) rotation (26). With controlled temperature, vacuum chamber (28) was used overnight for drying excess solvents from all electrospun membrane before proceeding further.

The method stage and steps for producing Layer 2 are: **4.2** - fabrication of Layer 2 stage; **4.2.1** - application of Layer 1 onto the surface of a collector; **4.2.2-**preparation of polymer solution for Layer 2; **4.2.3** - fabrication of Layer 2 by solution electrospinning onto Layer 1 surface.

Layer 2 is fabricated of CA, PCL, PMMA, or PLA under the following conditions:
- Polymer dissolved in solvent mixtures of AC and DMA (volume ratio 3:2 in case of CA), AC and DMF (2:3, PCL), DMF (PMMA), DCM and DMF (4:1, PLA);
- Polymer concentration 25% (CA), 20% (PCL and PLA), 15% (PMMA);
- Polymer solution mixing intensity 250 rpm (CA), 350 rpm (PCL, PMMA, PLA);
- Polymer solution temperature 25 °C (CA, PLA), 60 °C (PCL, PMMA);
- Electric field strength 2.2 kV/cm (CA), 1.47 kV/cm (PCL), 1.13 kV/cm (PMMA, PLA);
- Polymer solution feed rate 0.5 ml/h (CA), 2.0 ml/h (PCL), 3.0 ml/h (PMMA, PLA).

**Production of Layer 3.** A liquid-solution electrospinning setup, similar to that of Layer 2, was used to fabricate Layer 3, except that the collector is covered with the composite of Layer 1 and Layer 2.

The method stage and steps for producing Layer 3 are: **4.3** - fabrication of Layer 3 stage; **4.3.1** - preparation of polymer solution for Layer 3; **4.3.2** - fabrication of Layer 3 by solution electrospinning onto Layer 2 surface.

Layer 3 fabricated of CA, PCL, PA6, PMMA, PAN, or PLA under following conditions:
- Polymer dissolved in solvent mixtures of AC and DMA (volume ratio 2:1 in case of CA), AC and DMF (2:3, PCL), FA and AA (2:1 PA6), DMF (PMMA), DMF (PAN), DCM and DMF (4:1, PLA);
- Polymer concentration 17% (CA), 10% (PCL, PAN, PMMA), 13% (PA6), 10% (PMMA), 12% (PLA);
- Polymer solution mixing intensity 250 rpm (CA), 350 rpm (PCL, PA6, PMMA, PLA), 300 rpm (PAN);
- Polymer solution temperature 25 °C (CA, PLA, PA6, PAN,), 60 °C (PCL, PMMA, PLA);
- Electric field strength 1.33 kV/cm (CA, PAN), 1.16 kV/cm (PCL), 1.73 kV/cm (PA6), 1.5 kV/cm (PMMA, PLA);
- Polymer solution feed rate 0.3 ml/h (CA), 2.0 ml/h (PCL), 0.2 ml/h (PA6), 1.0 (PAN, PMMA, PLA).

**Postprocessing.** The method stage and steps for postprocessing are: **4.4-**Postprocessing and Storage stage; **4.4.1** - drying the fabricated multi-layered substrate; **4.4.2** - static charge removal; **4.4.3** - sterilizing the fabricated multi-layered substrate (optional); **4.3.4** - storage until sampling.

**Particle retention results by the sampling filter.** The presented invention results in aerosol particle collection filters having high particle collection efficiency, quantitatively described as higher than 99% at the most penetrating particle size range (0.3 µm).

The collection efficiency of several composite filters as a function of particle size is presented in Figure 5, as obtained with the nebulized NaCl aerosol.

**Industrial applications of the sampling filter and production method.** The practical applications of the manufactured filter disc involve installations in aerosol sampling devices in indoor, occupation, and ambient environments by the operators of aerosol particle sampling devices. The highest quantities of such sampling filters are consumed in frameworks of governmental air monitoring campaigns. However, the opportunity for controlling particle collection surface morphology and precursor polymer makes the key application of such sampling filters in scientific studies, namely in the development of new aerosol particle analysis techniques.

The industrial scale manufacturing of these filters will rely on the plurality of machinery described in this patent. The sizing of the production scale must be carefully considered, since the up-scaling of production may alter the morphology of filtering layers thus the properties of the final product.

## Claims

1. A method of producing a nano/micro fibrous filter substrate for sampling aerosol particles (17) comprising at least three fibrous layers (Layer 1, 2, 3), the method **comprising** at least:
• stage (4.1) of producing the first layer (Layer 1) as a structural microfibrous support layer (11), comprising steps of
∘ (4.1.1) extruding a polymer filament,
∘ (4.1.2) conditioning the extruded filament,
∘ (4.1.3) 3D-printing the first layer from the conditioned filament;
• stage (4.2) of producing the second layer (Layer 2) as a micro/nano mesofibrous binding layer (12), comprising steps of
∘ (4.2.1) applying the produced first layer (Layer 1) to a collector,
∘ (4.2.2) providing a polymer solution for the second layer (Layer 2),
∘ (4.2.3) producing the second layer (Layer 2) by electrospinning said polymer solution on the surface of the first layer (Layer 1);
• stage (4.3) of producing the third layer (Layer 3) as the nanofibrous surface layer (13) for the collection of aerosol particles (17), comprising steps of
∘ (4.3.1) providing a polymer solution for the third layer (Layer 3),
∘ (4.3.2) producing the third layer (Layer 3) by electrospinning said polymer solution on the surface of the second layer (Layer 2);
• stage (4.4) of postprocessing the substrate, comprising steps of
∘ (4.4.1) drying the fabricated substrate;
∘ (4.4.2) removing static charge from the fabricated substrate;
∘ optionally, (4.4.3) sterilizing the fabricated multi-layered substrate.

2. The method according to claim 1, wherein the production stage (4.1) of the first layer (Layer 1) comprises
extruding the polymer filament (33) from the polymer reel (34) to the heating-melting head (31) of the polymer filament (33), heating and melting the polymer filament (33), and directing it in an electric field on a polymeric fibre layer forming base (35),
**wherein**
• the polymer filament (33) is extruded by means of an extruder (32) from the polymer filament reel (34) into the heating-melting head (31) of the polymer melt in a sealed, climate-controlled chamber (310),
• the heating-melting head (31) is heated and the temperature is measured by supplying voltage from a low-voltage supply part of a power supply (36), and
• the heating-melting head is given a positive charge and the base is grounded, and the electric field between the positive heating-melting head (31) and the grounded base (35) of the polymeric fibre layer is generated by using high-voltage supply part of the power supply (36), and the high-voltage supply part in the heating-melting head (31) is isolated from the low-voltage supply part and from all other elements of the polymeric fibre layer forming apparatus;
and **wherein**
• the positioning of the polymer fibre layer (39) to be formed in space is controlled in three-dimensional space by changing the position of the heatingmelting head (31) in the x-z axes to guide the molten polymer from the bottom, from the heating-melting head (31), in the electric field, and by further changing the position of the grounded base (35) of the polymeric fibre matrix with respect to the heating-melting head (31) in the y-axis, and
• the polymer filament (33) is melted in the polymer heating-melting head (31) at a high melting temperature,
**whereby**
• the structure of the polymeric fibre matrix is changed by changing the distance from the heating-melting head (31) to the grounded base (35), said distance being changeable between 2 mm and 200 mm,
• the diameter of the microfibre filaments and the width of the surface pores of the layer (11) decrease with increasing value of high voltage between the heating-melting head (31) and the layer forming base (35), and vice-versa.

3. The method of claims 1 and 2, **wherein** in a sealed, climate-controlled chamber (310) the internal temperature of the chamber (310) is controlled by the temperature control module of the controller and the humidity by the air humidity control module of the controller, wherein the climate in the chamber (310) is controlled individually or in combination: heating, refrigeration, humidification, or dehumidification.

4. The method of claim 2 or 3, **wherein** the controller in the controlled climate chamber (310) monitors the climatic conditions at a frequency of 1 Hz and selects, respectively, the combinations of temperature and humidity values suitable for forming the polymer fibre layer in the controlled climate chamber (310).

5. The method according to any claim from 2 to 4, **wherein** the controller also controls the polymer dosing means (32), said control comprising controlling the polymer feed rate in the range of 0.01 to 100 mm/min.

6. The method according to any claim from 2 to 5, **wherein** positioning the dosing head comprises controlling it in the y-z axes at a speed of 1 to 100 mm/s.

7. The method according to any claim from 2 to 6, **wherein** a high voltage in the range of 0.5 kV to 30 kV is generated between the polymer dosing head and the base (35).

8. The method according to any claim from 2 to 7, **wherein** the power supply (36) automatically maintains the set voltage level at 100 Hz by measuring the current voltage and selecting the power of the high voltage converter.

9. The method according to claim 1, **wherein** the production stages (4.2, 4.3) of the second and third layers (Layer 2, 3) are implemented in the following technological setup comprising:
- a vacuum chamber (28);
- a plastic syringe fillable with a dissolved polymer (e.g.,10 ml),
- an automatic pump (22) for extruding the polymer from the syringe, a metal needle (23) with blunt end, a vertical rotating metal collector (25), and a high voltage source (24) applied to the metal needle (23) and the rotating metal collector (25);
wherein said technological setup is configured to produce the second and third layers (Layer 2, 3), by steps of:
- the dissolved polymer is collected with the syringe, which is then inserted into the automatic pump (22),
- a silicone tube is connected to the syringe, the other end of which is attached to the needle (23).
- the needle (23) is connected to a high voltage source (24),
- the high voltage source (24) is also connected to the rotating collector (25),
- the rotating collector (25) is covered with the previously produced first layer (Layer 1),
- using the automatic pump (22), the silicone tube is filled with the polymer solution;
- the polymer solution flow rates adjusted accordingly for each layer and the high voltage source (24) is turned on, as well as the collector rotation (25),
and during the production stages (4.2, 4.3) of the second and third layers
- Temperature and Humidity were controlled accordingly for each polymer solution,
- Positioning of the needle (23) stand is done accordingly to obtain uniform layers of fibre (27),
and after producing the fiber layers,
- with a controlled temperature, the vacuum chamber(28) was used overnight for drying excess solvents from the electrospun membrane.

10. The method according to claims from 1 to 9, **characterized in that** the first layer (Layer 1) is fabricated:
• using a polymer filament made of either poly-ε-caprolactone PCL, poly(lactic acid) PLA, or poly(hexano-6-lactam) PA6,
• and under the following process conditions:
∘ voltage between electrodes of 5.0E+03 - 1.0E+04 V,
∘ filament feed rate 2.3E-05 - 1.2E-04 g/s,
∘ hot end temperature,
∘ and tip to collector distance 5.0E-03 m - 1.0E-02 m.

11. The method according to claims from 1 to 9, **characterized in that** the second layer (Layer 2) is fabricated:
• of cellulose acetate CA, poly-ε-caprolactone PCL, poly(methacrylic acid methyl ester) PMMA, or poly(lactic acid) PLA,
• and under the following conditions:
∘ polymer dissolved in solvent mixtures of: acetone AC and N,N-dimethylacetamide DMA wherein AC:DMA volume ratio is 3:2 in case of CA, acetone AC and N,N-dimethylformamide DMF wherein AC:DMF ratio is 2:3 for PCL, DMF for PMMA, and DCM and DMF by ratio 4:1 for PLA;
∘ polymer concentration is: 25% for CA, 20% for PCL and PLA, and 15% for PMMA;
∘ polymer solution mixing intensity is: 250 rpm for CA, 350 rpm for PCL, PMMA, PLA;
∘ polymer solution temperature is: 25 °C for CA, PLA, 60°C for PCL, PMMA;
∘ electric field strength is: 2.2 kV/cm for CA, 1.47 kV/cm for PCL, 1.13 kV/cm for PMMA, PLA;
∘ polymer solution feed rate is: 0.5 ml/h for CA, 2.0 ml/h for PCL, 3.0 ml/h for PMMA, PLA.

12. The method according to claims from 1 to 9, **characterized in that** the third layer (Layer 3) is fabricated:
• of cellulose acetate CA, poly-ε-caprolactone PCL, poly(hexano-6-lactam) PA6, poly(methacrylic acid methyl ester) PMMA, poly(1-acrylonitrile) PAN, or poly(lactic acid) PLA,
• and under following conditions:
∘ polymer dissolved in solvent mixtures of: AC and DMA with volume ratio 2:1 in case of CA, AC and DMF with volume ratio 2:3 for PCL), FA and AA with volume ratio 2:1 for PA6), DMF for PMMA, DMF for PAN, DCM and DMF with volume ratio 4:1 for PLA;
∘ polymer concentration is: 17% for CA, 10% for PCL, PAN, PMMA, 13% for PA6, 10% for PMMA, 12% for PLA;
∘ polymer solution mixing intensity is: 250 rpm for CA, 350 rpm for PCL, PA6, PMMA, PLA, 300 rpm for PAN;
∘ polymer solution temperature is: 25°C for CA, PLA, PA6, PAN, 60°C for PCL, PMMA, PLA;
∘ electric field strength is: 1.33 kV/cm for CA, PAN, 1.16 kV/cm for PCL, 1.73 kV/cm for PA6, 1.5 kV/cm for PMMA, PLA;
∘ polymer solution feed rate is: 0.3 ml/h for CA, 2.0 ml/h for PCL, 0.2 ml/h for PA6, 1.0 ml/h for PAN, PMMA, PLA.

13. A 2D composite filter disc comprising at least the three-layer composition of the substrate, produced by the method according to claim 1, **wherein**
• the thickness of each layer of the 3 layers (Layer 1, 2, 3) is in the range between 50 and 150 micrometres, and
• the first layer (Layer 1) serving as the structural microfibrous support layer (11) comprises a microfibre matrix, said matrix having filament diameter of 300.0 ± 50 nm to 4.0 ± 2.5 µm and a surface pore size of 600.0 ± 70.0 nm to 15.0 ± 6.0 µm.

## Patentansprüche

1. Verfahren zum Produzieren eines faserigen Nano-/Mikrofiltersubstrats zum Entnehmen von Aerosolteilchen (17), umfassend zumindest drei faserige Schichten (Schicht 1, 2, 3), wobei das Verfahren zumindest Folgendes **umfasst:**
• Stufe (4.1) des Produzierens der ersten Schicht (Schicht 1) als eine strukturelle mikrofaserige Stützschicht (11), umfassend folgende Schritte:
∘ (4.1.1) Extrudieren eines Polymerfilaments,
∘ (4.1.2) Konditionieren des extrudierten Filaments,
∘ (4.1.3) 3D-Drucken der ersten Schicht von dem konditionierten Filament;
• Stufe (4.2) des Produzierens der zweiten Schicht (Schicht 2) als eine mesofaserige Mikro-/Nanobindungsschicht (12), umfassend folgende Schritte:
∘ (4.2.1) Auftragen der produzierten ersten Schicht (Schicht 1) auf einen Sammler,
∘ (4.2.2) Bereitstellen einer Polymerlösung für die zweite Schicht (Schicht 2),
∘ (4.2.3) Produzieren der zweiten Schicht (Schicht 2) durch Elektrospinnen der Polymerlösung auf der Oberfläche der ersten Schicht (Schicht 1);
• Stufe (4.3) des Produzierens der dritten Schicht (Schicht 3) als die nanofaserige Oberflächenschicht (13) für die Sammlung von Aerosolteilchen (17), umfassend folgende Schritte:
∘ (4.3.1) Bereitstellen einer Polymerlösung für die dritte Schicht (Schicht 3),
∘ (4.3.2) Produzieren der dritten Schicht (Schicht 3) durch Elektrospinnen der Polymerlösung auf der Oberfläche der zweiten Schicht (Schicht 2);
• Stufe (4.4) des Nachbearbeitens des Substrats, umfassend folgende Schritte:
∘ (4.4.1) Trocknen des gefertigten Substrats;
∘ (4.4.2) Entfernen von statischer Ladung von dem gefertigten Substrat;
∘ optional (4.4.3) Sterilisieren des gefertigten mehrschichtigen Substrats.

2. Verfahren nach Anspruch 1, wobei die Produktionsstufe (4.1) der ersten Schicht (Schicht 1) Folgendes umfasst:
Extrudieren des Polymerfilaments (33) von der Polymerspule (34) zu dem Heißschmelzkopf (31) des Polymerfilaments (33), Erhitzen und Schmelzen des Polymerfilaments (33) und Leiten desselben in einem elektrischen Feld auf einer Polymerfaserschichtbildungsbasis (35),
**wobei**
• das Polymerfilament (33) mittels eines Extruders (32) von der Polymerfilamentspule (34) in den Heißschmelzkopf (31) der Polymerschmelze in einer verschlossenen, klimagesteuerten Kammer (310) extrudiert wird,
• der Heißschmelzkopf (31) erhitzt wird und die Temperatur gemessen wird, indem Spannung von einem Niederspannungszufuhrteil einer Leistungszufuhr (36) zugeführt wird, und
• dem Heißschmelzkopf eine positive Ladung gegeben wird und die Basis geerdet wird und das elektrische Feld zwischen dem positiven Heißschmelzkopf (31) und der geerdeten Basis (35) der Polymerfaserschicht erzeugt wird, indem ein Hochspannungszufuhrteil der Leistungszufuhr (36) verwendet wird und das Hochspannungszufuhrteil in dem Heißschmelzkopf (31) von dem Niederspannungszufuhrteil und von allen anderen Elementen der Polymerfaserschichtbildungsvorrichtung isoliert wird;
und **wobei**
• das Positionieren der Polymerfaserschicht (39), die in Raum zu bilden ist, in dreidimensionalem Raum gesteuert wird, indem die Position des Heißschmelzkopfes (31) in den x-z-Achsen geändert wird, um das geschmolzene Polymer von dem Boden von dem Heißschmelzkopf (31) in dem elektrischen Feld zu führen, und indem ferner die Position der geerdeten Basis (35) der Polymerfasermatrix in Bezug auf den Heißschmelzkopf (31) in der y-Achse geändert wird, und
• das Polymerfilament (33) in dem Polymerheißschmelzkopf (31) bei einer hohen Schmelztemperatur geschmolzen wird,
**wodurch**
• die Struktur der Polymerfasermatrix geändert wird, indem der Abstand von dem Heißschmelzkopf (31) zu der geerdeten Basis (35) geändert wird, wobei der Abstand zwischen 2 mm und 200 mm änderbar ist,
• der Durchmesser der Mikrofaserfilamente und die Breite der Oberflächenporen der Schicht (11) mit zunehmendem Wert von Hochspannung zwischen dem Heißschmelzkopf (31) und der Schichtbildungsbasis (35) abnehmen und umgekehrt.

3. Verfahren nach Anspruch 1 und 2, **wobei** in einer verschlossenen, klimagesteuerten Kammer (310) die Innentemperatur der Kammer (310) durch das Temperatursteuermodul der Steuerung und die Luftfeuchtigkeit durch das Luftfeuchtigkeitssteuermodul der Steuerung gesteuert werden, wobei das Klima in der Kammer (310) individuell oder in Kombination gesteuert wird: Erhitzen, Kühlung, Befeuchtung oder Entfeuchtung.

4. Verfahren nach Anspruch 2 oder 3, **wobei** die Steuerung in der gesteuerten Klimakammer (310) die klimatischen Bedingungen bei einer Frequenz von 1 Hz überwacht und jeweils die Kombinationen aus Temperatur- und Luftfeuchtigkeitswerten auswählt, die zum Bilden der Polymerfaserschicht in der gesteuerten Klimakammer (310) geeignet sind.

5. Verfahren nach einem Anspruch von 2 bis 4, **wobei** die Steuerung auch das Polymerdosiermittel (32) steuert, wobei die Steuerung Steuern der Polymerspeiserate in dem Bereich von 0,01 bis 100 mm/min umfasst.

6. Verfahren nach einem Anspruch von 2 bis 5, **wobei** Positionieren des Dosierkopfes Steuern desselben in den y-z-Achsen bei einer Geschwindigkeit von 1 bis 100 mm/s umfasst.

7. Verfahren nach einem Anspruch von 2 bis 6, **wobei** eine Hochspannung in dem Bereich von 0,5 kV bis 30 kV zwischen dem Polymerdosierkopf und der Basis (35) erzeugt wird.

8. Verfahren nach einem Anspruch von 2 bis 7, **wobei** die Leistungszufuhr (36) das festgelegte Spannungsniveau bei 100 Hz automatisch beibehält, indem die Stromspannung gemessen und die Leistung des Hochspannungswandlers ausgewählt wird.

9. Verfahren nach Anspruch 1, **wobei** die Produktionsstufen (4.2, 4.3) der zweiten und der dritten Schicht (Schicht 2, 3) in dem folgenden technologischen Aufbau implementiert sind, umfassend:
- eine Vakuumkammer (28);
- eine Plastikspritze, die mit einem gelösten Polymer füllbar ist (z. B. 10 ml),
- eine automatische Pumpe (22) zum Extrudieren des Polymers aus der Spritze, eine Metallnadel (23) mit stumpfem Ende, einen vertikal rotierenden Metallsammler (25) und eine Hochspannungsquelle (24), die auf die Metallnadel (23) und den rotierenden Metallsammler (25) aufgebracht wird;
wobei der technologische Aufbau konfiguriert ist, um die zweite und die dritte Schicht (Schicht 2, 3) durch folgende Schritte zu produzieren:
- das gelöste Polymer wird mit der Spritze gesammelt, die dann in die automatische Pumpe (22) eingeführt wird,
- ein Silikonrohr wird mit der Spritze verbunden, dessen anderes Ende an der Nadel (23) angebracht ist.
- die Nadel (23) wird mit einer Hochspannungsquelle (24) verbunden,
- die Hochspannungsquelle (24) wird auch mit dem rotierenden Sammler (25) verbunden,
- der rotierende Sammler (25) wird mit der zuvor produzierten ersten Schicht (Schicht 1) bedeckt,
- unter Verwendung der automatischen Pumpe (22) wird das Silikonrohr mit der Polymerlösung gefüllt;
- die Polymerlösungsflussraten für jede Schicht entsprechend eingestellt und die Hochspannungsquelle (24) wird eingeschaltet, sowie die Sammlerrotation (25),
und während der Produktionsstufen (4.2, 4.3) der zweiten und der dritten Schicht
- Temperatur und Luftfeuchtigkeit wurden für jede Polymerlösung entsprechend gesteuert,
- Positionieren des Standes der Nadel (23) erfolgt entsprechend, um gleichmäßige Schichten von Faser (27) zu erhalten,
und nach dem Produzieren der Faserschichten
- mit einer gesteuerten Temperatur wurde die Vakuumkammer (28) über Nacht zum Trocknen von überschüssigen Lösungsmitteln von der elektrogesponnenen Membran verwendet.

10. Verfahren nach Anspruch 1 bis 9, **dadurch gekennzeichnet, dass** die erste Schicht (Schicht 1) wie folgt gefertigt wird:
• unter Verwendung eines Polymerfilaments entweder aus Poly-ε-Caprolacton PCL, Poly(milchsäure) PLA oder Poly(Hexano-6-lactam) PA6,
• und unter den folgenden Prozessbedingungen:
∘ Spannung zwischen Elektroden von 5,0E+03 - 1,0E+04 V,
∘ Filamentspeiserate 2,3E-05 - 1,2E-04 g/s,
∘ Heißendtemperatur,
∘ und Abstand von Spitze zu Sammler 5,0E-03 m - 1,0E-02 m.

11. Verfahren nach Anspruch 1 bis 9, **dadurch gekennzeichnet, dass** die zweite Schicht (Schicht 2) wie folgt gefertigt wird:
• aus Celluloseacetat CA, Poly-ε-Caprolacton PCL, Poly(Methacrylsäuremethylester) PMMA oder Poly(milchsäure) PLA,
• und unter den folgenden Bedingungen:
∘ Polymer gelöst in Lösungsmittelmischungen von: Aceton AC und N,N-Dimethylacetamid DMA, wobei AC:DMA-Volumenverhältnis 3:2 im Falle von CA, Aceton AC und N,N-Dimethylformamid DMF ist, wobei AC:DMF-Verhältnis 2:3 für PCL, DMF für PMMA und DCM und DMF nach Verhältnis 4:1 für PLA ist;
∘ Polymerkonzentration ist: 25 % für CA, 20 % für PCL und PLA und 15 % für PMMA;
∘ Polymerlösungsmischintensität ist: 250 U/min für CA, 350 U/min für PCL, PMMA, PLA;
∘ Polymerlösungstemperatur ist: 25 °C für CA, PLA, 60 °C für PCL, PMMA;
∘ elektrische Feldstärke ist: 2,2 kV/cm für CA, 1,47 kV/cm für PCL, 1,13 kV/cm für PMMA, PLA;
∘ Polymerlösungsspeiserate ist: 0,5 ml/h für CA, 2,0 ml/h für PCL, 3,0 ml/h für PMMA, PLA.

12. Verfahren nach Anspruch 1 bis 9, **dadurch gekennzeichnet, dass** die dritte Schicht (Schicht 3) wie folgt gefertigt wird:
• aus Celluloseacetat CA, Poly-ε-Caprolacton PCL, Poly(Hexano-6-lactam) PA6, Poly(Methacrylsäuremethylester) PMMA, Poly(1-Acrylonitril) PAN oder Poly(milchsäure) PLA,
• und unter folgenden Bedingungen:
∘ Polymer gelöst in Lösungsmittelmischungen von: AC und DMA mit Volumenverhältnis 2:1 im Falle von CA, AC und DMF mit Volumenverhältnis 2:3 für PCL), FA und AA mit Volumenverhältnis 2:1 für PA6), DMF für PMMA, DMF für PAN, DCM und DMF mit Volumenverhältnis 4:1 für PLA;
∘ Polymerkonzentration ist: 17 % für CA, 10 % für PCL, PAN, PMMA, 13 % für PA6, 10 % für PMMA, 12 % für PLA;
∘ Polymerlösungsmischintensität ist: 250 U/min für CA, 350 U/min für PCL, PA6, PMMA, PLA, 300 U/min für PAN;
∘ Polymerlösungstemperatur ist: 25 °C für CA, PLA, PA6, PAN, 60 °C für PCL, PMMA, PLA;
∘ elektrische Feldstärke ist: 1,33 kV/cm für CA, PAN, 1,16 kV/cm für PCL, 1,73 kV/cm für PA6, 1,5 kV/cm für PMMA, PLA;
∘ Polymerlösungsspeiserate ist: 0,3 ml/h für CA, 2,0 ml/h für PCL, 0,2 ml/h für PA6, 1,0 ml/h für PAN, PMMA, PLA.

13. 2D-Verbundfilterscheibe, umfassend zumindest die dreischichtige Zusammensetzung des Substrats, produziert durch das Verfahren nach Anspruch 1, **wobei**
• die Dicke jeder Schicht der 3 Schichten (Schicht 1, 2, 3) in dem Bereich zwischen 50 und 150 Mikrometern ist und
• die erste Schicht (Schicht 1), die als die strukturelle mikrofaserige Stützschicht (11) dient, eine Mikrofasermatrix umfasst, wobei die Matrix Filamentdurchmesser von 300,0 ± 50 nm bis 4,0 ± 2,5 µm und eine Oberflächenporengröße von 600,0 ± 70,0 nm bis 15,0 ± 6,0 µm aufweist.

## Revendications

1. Procédé de fabrication d'un substrat de filtre nano/microfibreux pour l'échantillonnage de particules d'aérosol (17) comprenant au moins trois couches fibreuses (couches 1, 2, 3), le procédé **comprenant** au moins :
• l'étape (4.1) de production de la première couche (couche 1) en tant que couche de support microfibre structurelle (11), comprenant les étapes suivante
∘ (4.1.1) l'extrusion d'un filament polymère,
∘ (4.1.2) le conditionnement du filament extrudé,
∘ (4.1.3) l'impression 3D de la première couche à partir du filament conditionné ;
• l'étape (4.2) de production de la deuxième couche (couche 2) en tant que couche de liaison micro/nano mésofibreuse (12), comprenant les étapes consistant à
∘ (4.2.1) appliquer la première couche produite (couche 1) à un collecteur,
∘ (4.2.2) fournir une solution polymère pour la deuxième couche (couche 2),
∘ (4.2.3) produire la deuxième couche (couche 2) par électrofilage de ladite solution de polymère sur la surface de la première couche (couche 1) ;
• l'étape (4.3) de production de la troisième couche (couche 3) en tant que couche de surface nanofibreuse (13) pour la collecte de particules d'aérosol (17), comprenant les étapes consistant à
∘ (4.3.1) fournir une solution polymère pour la troisième couche (couche 3),
∘ (4.3.2) produire la troisième couche (couche 3) par électrofilage de ladite solution de polymère sur la surface de la deuxième couche (couche 2) ;
• l'étape (4.4) de post-traitement du substrat, comprenant les étapes suivante
∘ (4.4.1) le séchage du produit fabriqué substrat ;
∘ (4.4.2) l'élimination de la charge statique du substrat fabriqué ;
∘ éventuellement, (4.4.3) la stérilisation du substrat multicouche fabriqué.

2. Procédé selon la revendication 1, dans lequel l'étape de production (4.1) de la première couche (couche 1) comprend l'extrusion du filament polymère (33) de la bobine de polymère (34) vers la tête de chauffage-fusion (31) du filament polymère (33), le chauffage et la fusion du filament polymère (33) et la direction de celui-ci dans un champ électrique sur une base de formation de couche de fibres polymères (35), **dans lequel**
• le filament polymère (33) est extrudé au moyen d'une extrudeuse (32) à partir de la bobine de filament polymère (34) dans la tête de chauffage-fusion (31) du polymère fondu dans une chambre étanche et climatisée (310),
• la tête de chauffage-fusion (31) est chauffée et la température est mesurée en fournissant une tension à partir d'une partie d'alimentation basse tension d'une alimentation électrique (36), et
• la tête de chauffage-fusion reçoit une charge positive et la base est mise à la terre, et le champ électrique entre la tête de chauffage-fusion positive (31) et la base mise à la terre (35) de la couche de fibres polymères est généré en utilisant la partie d'alimentation haute tension de l'alimentation électrique (36), et la partie d'alimentation haute tension dans la tête de chauffage-fusion (31) est isolée de la partie d'alimentation basse tension et de tous les autres éléments de l'appareil de formation de couche de fibres polymères ; et **dans lequel**
• le positionnement de la couche de fibres polymères (39) à former dans l'espace est contrôlé dans l'espace tridimensionnel en modifiant la position de la tête de chauffage-fusion (31) dans les axes x-z pour guider le polymère fondu depuis le bas, depuis la tête de chauffage-fusion (31), dans le champ électrique, et en modifiant en outre la position de la base mise à la terre (35) de la matrice de fibres polymères par rapport à la tête de chauffage-fusion (31) dans l'axe y, et
• le filament polymère (33) est fondu dans la tête de chauffage-fusion polymère (31) à une température de fusion élevée, **moyennant quoi**
• la structure de la matrice de fibres polymères est modifiée en modifiant la distance entre la tête de chauffage-fusion (31) et la base mise à la terre (35), ladite distance pouvant être modifiée entre 2 mm et 200 mm,
• le diamètre des filaments de microfibres et la largeur des pores superficiels de la couche (11) diminuent avec l'augmentation de la valeur de la haute tension entre la tête de chauffage-fusion (31) et la base de formation de couche (35), et vice-versa.

3. Procédé selon les revendications 1 et 2, **dans lequel,** dans une chambre étanche et climatisée (310), la température interne de la chambre (310) est contrôlée par le module de contrôle de température du contrôleur et l'humidité par le module de contrôle d'humidité de l'air du contrôleur, le climat dans la chambre (310) étant contrôlé individuellement ou en combinaison : le chauffage, la réfrigération, l'humidification ou la déshumidification.

4. Procédé selon la revendication 2 ou 3, **dans lequel** le contrôleur dans la chambre climatisée (310) surveille les conditions climatiques à une fréquence de 1 Hz et sélectionne, respectivement, les combinaisons de valeurs de température et d'humidité appropriées pour former la couche de fibres polymères dans la chambre climatisée (310).

5. Procédé selon l'une quelconque des revendications 2 à 4, **dans lequel** le contrôleur contrôle également les moyens de dosage de polymère (32), ledit contrôle comprenant le contrôle du débit d'alimentation en polymère dans la plage de 0,01 à 100 mm/min.

6. Procédé selon l'une quelconque des revendications 2 à 5, **dans lequel** le positionnement de la tête de dosage comprend sa commande dans les axes y-z à une vitesse de 1 à 100 mm/s.

7. Procédé selon l'une quelconque des revendications 2 à 6, **dans lequel** une haute tension dans la plage de 0,5 kV à 30 kV est générée entre la tête de dosage de polymère et la base (35).

8. Procédé selon l'une quelconque des revendications 2 à 7, **dans lequel** l'alimentation électrique (36) maintient automatiquement le niveau de tension réglé à 100 Hz en mesurant la tension actuelle et en sélectionnant la puissance du convertisseur haute tension.

9. Procédé selon la revendication 1, **dans lequel** les étapes de production (4.2, 4.3) des deuxième et troisième couches (couches 2, 3) sont mises en œuvre selon le dispositif technologique suivant :
- une chambre à vide (28) ;
- une seringue en plastique remplissable avec un polymère dissous (par exemple 10 ml),
- une pompe automatique (22) pour extruder le polymère de la seringue, une aiguille métallique (23) à extrémité émoussée, un collecteur métallique rotatif vertical (25) et une source de haute tension (24) appliquée à l'aiguille métallique (23) et au collecteur métallique rotatif (25) ;
dans lequel ladite configuration technologique est configurée pour produire les deuxième et troisième couches (couches 2, 3), par les étapes suivantes :
- le polymère dissous est recueilli avec la seringue, qui est ensuite insérée dans la pompe automatique (22),
- un tube en silicone est relié à la seringue, dont l'autre extrémité est fixée à l'aiguille (23),
- l'aiguille (23) est reliée à une source haute tension (24),
- la source haute tension (24) est également reliée au collecteur rotatif (25),
- le collecteur rotatif (25) est recouvert de la première couche précédemment réalisée (couche 1),
- à l'aide de la pompe automatique (22), le tube en silicone est rempli de la solution de polymère ;
- les débits de solution de polymère sont ajustés en conséquence pour chaque couche et la source haute tension (24) est allumée, ainsi que la rotation du collecteur (25), et pendant les étapes de production (4.2, 4.3) des deuxième et troisième couches
- la température et l'humidité ont été contrôlées en conséquence pour chaque solution de polymère,
- le positionnement de l'aiguille (23) est effectué en conséquence pour obtenir des couches uniformes de fibres (27), et
après avoir réalisé les couches de fibres,
- à température contrôlée, la chambre à vide (28) a été utilisée pendant la nuit pour sécher l'excès de solvants de la membrane électrofilée.

10. Procédé selon les revendications 1 à 9, **caractérisé en ce que** la première couche (couche 1) est fabriquée :
• en utilisant un filament polymère constitué soit de poly-ε- caprolactone PCL, de poly(acide lactique) PLA, soit de poly(hexano-6-lactame) PA6,
• et dans les conditions de procédé suivantes :
∘ la tension entre les électrodes de 5,0E+03 à 1,0E+04 V,
∘ le débit d'alimentation du filament 2,3E-05 à 1,2E-04 g/s,
∘ la température de l'extrémité chaude,
∘ et la distance de la pointe au collecteur 5,0E-03 m à 1,0E-02 m.

11. Procédé selon les revendications 1 à 9, **caractérisé en ce que** la deuxième couche (couche 2) est fabriquée :
• d'acétate de cellulose CA, de poly-ε-caprolactone PCL, de poly( ester méthylique d'acide méthacrylique) PMMA ou de poly(acide lactique) PLA,
• et dans les conditions suivantes :
∘ le polymère dissous dans des mélanges de solvants d'acétone AC et de N,N-diméthylacétamide DMA où le rapport volumique AC:DMA est de 3:2 dans le cas de CA, d'acétone AC et de N,N- diméthylformamide DMF où le rapport AC:DMF est de 2:3 pour PCL, DMF pour PMMA, et DCM et DMF dans un rapport de 4:1 pour PLA ;
∘ la concentration en polymère est de : 25 % pour CA, 20 % pour PCL et PLA et 15 % pour PMMA ;
∘ l'intensité de mélange de la solution polymère est de : 250 tr/min pour CA, 350 tr/min pour PCL, PMMA, PLA ;
∘ la température de la solution polymère est de : 25 °C pour CA, PLA, 60 °C pour PCL, PMMA ;
∘ l'intensité du champ électrique est de : 2,2 kV/cm pour CA, 1,47 kV/cm pour PCL, 1,13 kV/cm pour PMMA, PLA ;
∘ la vitesse d'alimentation de polymère est de : 0,5 ml/h pour CA, 2,0 ml/h pour PCL, 3,0 ml/h pour PMMA, PLA.

12. Procédé selon les revendications 1 à 9, **caractérisé en ce que** la troisième couche (couche 3) est fabriquée :
• d'acétate de cellulose CA, de poly-ε-caprolactone PCL, de poly(hexano-6-lactame)PA6, de poly(ester méthylique d'acide méthacrylique) PMMA, de poly(1-acrylonitrile)PAN ou de poly(acide lactique)PLA,
• et dans les conditions suivantes :
∘ le polymère dissous dans des mélanges de solvants de : AC et DMA avec un rapport volumique de 2:1 pour CA, AC et DMF avec un rapport volumique de 2:3 pour PCL, FA et AA avec un rapport volumique de 2:1 pour PA6, DMF pour PMMA, DMF pour PAN, DCM et DMF avec un rapport volumique de 4:1 pour PLA ;
∘ la concentration en polymère est de : 17 % pour CA, 10 % pour PCL, PAN, PMMA, 13 % pour PA6, 10 % pour PMMA, 12 % pour PLA ;
∘ l'intensité de mélange de la solution polymère est de : 250 tr/min pour CA, 350 tr/min pour PCL, PA6, PMMA, PLA, 300 tr/min pour PAN ;
∘ la température de la solution polymère est de : 25°C pour CA, PLA, PA6, PAN, 60°C pour PCL, PMMA, PLA ;
∘ l'intensité du champ électrique est de : 1,33 kV/cm pour CA, PAN, 1,16 kV/cm pour PCL, 1,73 kV/cm pour PA6, 1,5 kV/cm pour PMMA, PLA ;
∘ la vitesse d'alimentation de polymère est de : 0,3 ml/h pour CA, 2,0 ml/h pour PCL, 0,2 ml/h pour PA6, 1,0 ml/h pour PAN, PMMA, PLA.

13. Disque filtrant composite 2D comprenant au moins la composition à trois couches du substrat, produit par le procédé selon la revendication 1, **dans lequel**
• l'épaisseur de chaque couche des 3 couches (couche 1, 2, 3) est comprise entre 50 et 150 micromètres, et
• la première couche (couche 1) servant de couche de support microfibre structurelle (11) comprend une matrice en microfibre, ladite matrice ayant un diamètre de filament de 300,0 ± 50 nm à 4,0 ± 2,5 µm et une taille de pores de surface de 600, 0 ± 70,0 nm à 15,0 ± 6,0 µm.
